Europäisches Patentamt

European Patent Office

Office européen des brevets

(19)

(11) Publication number: **0 133 373**
**A1**

# EUROPEAN PATENT APPLICATION

(12)

(21) Application number: **84305294.5**

(22) Date of filing: **03.08.84**

(51) Int. Cl.⁴: **C 08 F 12/12**

(30) Priority: **08.08.83 US 521235**

(43) Date of publication of application: **20.02.85**
**Bulletin 85/8**

(84) Designated Contracting States: **BE DE FR GB IT NL SE**

(71) Applicant: **Exxon Research and Engineering Company,**
**P.O.Box 390 180 Park Avenue, Florham Park New**
**Jersey 07932 (US)**

(72) Inventor: **Evans, Morris Lee, 723 Shadyglen Drive, Baton**
**Rouge Louisiana (US)**

(74) Representative: **Bawden, Peter Charles et al, ESSO**
**CHEMICAL LIMITED Esso Chemical Research Centre**
**PO Box 1, Abingdon Oxfordshire OX13 6BB (GB)**

(54) **High softening point aromatic resin.**

(57) High softening point, i.e. greater than 140°C, aromatic resins are prepared by polymerizing with an AlCl₃ catalyst a solution of p-methylstyrene in a non-reactive diluent such as toluene and thereafter recovering an aromatic polymer, poly(p-methylstyrene), having a softening point of 135°C to 160°C.

EP 0 133 373 A1

This invention relates to high softening point hydrocarbon resins prepared by polymerizing p-methyl styrene by means of an aluminum chloride catalyst. The polymerized resin is then quenched, washed to remove catalyst residues and finished to provide high softening point hydrocarbon resins.

BACKGROUND OF THE INVENTION

Hydrocarbon resins can be produced from certain petroleum refinery streams containing mixtures of olefins and diolefins by polymerization using Friedel-Crafts catalysts. The steam cracked streams have been found especially useful for this purpose. The resins produced from these streams oftentimes have softening points lower than desired for certain applications, such as, for example, offset ink printing which requires a softening point of about 140°C.

The manufacture of hydrocarbon resins having a softening point of 140°C or above is disclosed in several U.S. Patents including U.S. Patent No. 2,753,326, U.S. 3,753,963 (resins having softening points of 115 to 158°C are reported as being prepared from a feedstock comprised of styrene and its derivatives, and indene and its derivatives), and U.K. 2,032,442 (softening points up to 160°C for resins prepared from a feedstock of limonene and piperylene concentrates) and in U.S. Patent Application Serial No. 387,342 filed June 11, 1983 (of common assignee) which discloses that petroleum resins having a softening point of at least 140°C can be produced by means of an aluminum chloride catalyst when the polymerization mixture is composed of about 0.4 parts by weight of cyclopentadiene oligomers and one part by weight of an aromatic olefinic fraction having a boiling range of from 135 to 220°C.

U.S. Patent 4,230,836 teaches of chemically cross-linked poly(p-methylstyrene) which polymer has been catalytically homopolymerized.

## STATEMENT OF THE INVENTION

Surprisingly, it has been discovered that a resin having a softening point of at least 140°C can be produced by means of an aluminum chloride catalyst when the polymerization mixture is composed of p-methyl-styrene and a non-reactive diluent whereas the polymerization of styrene and $\alpha$-methylstyrene until identical conditions provided polymers having softening points of 30-40°C lower and at least 100°C lower, respectively.

Therefore, in accordance with this invention there is realized a high softening point poly(p-methyl-styrene) prepared by a process which comprises polymerizing in the presence of at least a catalytic amount of aluminum chloride a solution of p-methylstyrene in a non-reactive diluent, washing the polymerized hydrocarbon mixture with aqueous isopropanol solution, and finishing the polymerizate to provide a polymeric resin having a softening point of about 135°C to about 160°C.

## DETAILED DESCRIPTION OF THE INVENTION

As set forth above the high softening point resins of poly(para-methylstyrene) are obtained by a process which comprises polymerizing with an aluminum chloride catalyst a solution of para-methylstyrene in a non-reactive diluent. The para-methylstyrene is commercially available.

The solvent for the solution of p-methyl styrene to be polymerized is a non-reactive diluent and solvent for the p-methylstyrene and preferably of the class of toluene, xylene (commercially available as a mixture of the xylene isomers) and benzene. The non-reactive diluent ranges from 40 to 90, preferably 50 to 80, optimally about 60, weight percent of the solution. The solvent structure influences the softening point of the polymer, e.g. at a 60 weight percent level the use of: benzene resulted in a softening point of 145°C; mixed xylenes resulted in a

softening point of 140.5°C; and, toluene resulted in a softening point of 148°C. The yield of resin is inverse to the concentration of the non-reactive diluent.

The resin feedstock mixture may be polymerized in a conventional manner with conventional aluminum chloride catalyst. The polymerizations can be run either batch wise or continuous.

In batch runs the aluminum trichloride is added to the stirred feedstock under an inert atmosphere. The usual catalyst concentrations are in the range of 0.2 to 5 weight percent and preferably 0.3 to 1.7 weight percent based on the p-methylstyrene content of the feedstock. The feedstock solution is adjusted to the polymerization temperature of about 0 to 60°C. and maintained at that temperature the prescribed length of time. The preferred conditions using aluminum chloride as the catalyst is 0.5 percent catalyst for a reaction temperature of 40°C for a period of about 1 to 2 hours.

In the continuous runs, catalyst and p-methylstyrene feedstock solutions are added to a stirred reactor maintained at the polymerization temperature under an inert atmosphere. The concentration of aluminum chloride catalyst is usually in the range of 0.3 to 3 and preferably 0.5 to 1.25 by weight with the temperatures of the reactor at 0 to 60°C. The most suitable feed addition rate gives an approximate residence time of 0.3 to 2.0 hours.

The resultant polymer mixture is then quenched with an aqueous isopropanol solution to destroy the catalyst, washed and finished to produce a high softening point resin of from 133°C to 160°C.

This high softening point polymer may be emulsified by dissolving it in a hydrocarbon solvent such as toluene, and adding this mixture to water containing an emulsifier, such as an alkylaryl polyether alcohol. The resultant emulsion may then be stripped to remove the solvent.

3 AUG 1984

The invention can be further illustrated by the following examples.

EXAMPLES 1-3

Two parts by weight of p-methylstyrene was dissolved in three parts by weight of toluene, pumped into a reactor containing the catalyst under a nitrogen blanket, thoroughly agitated, and held at a temperature of 45°C. The AlCl₃ catalyst was added to the reactor at a 0.5 wt.% level based on the total weight of the solution.

The catalyst in the reactor polymerizate is quenched in a water-isopropanol solution and the polymerizate is subsequently washed with water. The polymer is finished by steam stripping at 250°C. The finished polymer softening point was 148°C and the Gardner color obtained by dissolving one wt. part of polymeric resin in one wt. of toluene was 1.5

When the non-reactive diluent was changed to the mixed xylenes and to benzene, the resulting resins had softening points of 140.5°C and 145°C, respectively with a Gardner color of 1.5. All softening points are measured according to the Standard Procedure of ASTM E-28.

0133373

## CLAIMS

1. In a process for preparing a polymer of p-methylstyrene comprising the steps of polymerizing p-methylstyrene monomer in the presence of at least a catalytic amount of polymerization catalyst and recovering the polymer of p-methylstyrene characterized by using a cationic catalyst and a solution of p-methylstyrene and a non-reactive diluent whereby said poly(p-methylstyrene) has a softening point of $135^{\circ}C$ to $160^{\circ}C$ as measured by ASTM E28.

2. A process according to Claim 1 wherein there is present from 40 to 90% by weight of said non-reactive diluent.

3. The process according to Claim 2 wherein said non-reactive diluent is of the class of toluene, xylene and benzene.

4. Poly(p-methylstyrene) having a softening point of $135^{\circ}C$ to $160^{\circ}C$ as measured by ASTM E28.

## European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 654 250 (B.J. DAVIS)<br>* claims 1,9; column 2, lines 25-45 * | 1-4 | C 08 F  12/12 |
| X | US-A-3 669 947 (H. KAHN et al.)<br>* claims 1,7; column 2, line 74 - column 3, line 4; example 2 * | 1-4 | |

|  |  |
|---|---|
|  | TECHNICAL FIELDS SEARCHED (Int. Cl. ³) |
|  | C 08 F |

The present search report has been drawn up for all claims

| Place of search | Date of completion of the search | Examiner |
|---|---|---|
| THE HAGUE | 18-09-1984 | CAUWENBERG C.L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82